## Europäisches Patentamt

## European Patent Office

## Office européen des brevets

(19)

(11) Veröffentlichungsnummer: **0 090 363**
**B1**

(12)

# EUROPÄISCHE PATENTSCHRIFT

(45) Veröffentlichungstag der Patentschrift:
**15.01.86**

(21) Anmeldenummer: **83102962.4**

(22) Anmeldetag: **24.03.83**

(51) Int. Cl.⁴: **H 04 N 7/00,** H 04 B 7/14,
H 04 N 5/38

(54) **Verwischungssignal für bandbegrenzte, frequenzmodulierte Fernsehübertragungswege.**

(30) Priorität: **26.03.82 DE 3211131**

(43) Veröffentlichungstag der Anmeldung:
**05.10.63 Patentblatt 83/40**

(45) Bekanntmachung des Hinweises auf die Patenterteilung:
**15.01.86 Patentblatt 86/3**

(84) Benannte Vertragsstaaten:
**AT BE CH DE FR GB IT LI LU NL SE**

(56) Entgegenhaltungen:
**DE-A-2 363 289**
**US-A-3 617 892**

**E. HERTER, H. RUPP "Nachrichtenübertragung
über Satelliten", 1979 SPRINGER-VERLAG, Berlin,
Heidelberg, New York, Seiten 112-114, 192**

(73) Patentinhaber: **Siemens Aktiengesellschaft, Berlin
und München Wittelsbacherplatz 2, D-8000
München 2 (DE)**

(72) Erfinder: **Nickl, Johann, Kittlerstrasse 6, D-6100
Darmstadt (DE)**
Erfinder: **Harm, Hartwig, Dr., Ludwig- Thoma-
Strasse 21, D-8013 Haar (DE)**

EP 0 090 363 B1

## Beschreibung

Die Erfindung betrifft ein Verwischungssignal für bandbegrenzte, frequenzmodulierte Fernsehübertragungswege, siehe z.B. E. Herter, H.Rupp "Nachrichtenübertragung über Satelliten", 1979, Springer-Verlag, Berlin, Heidelberg, New York, Seiten 112-114 und 192.

Ein Verwischungssignal ist bei bandbegrenzten, frequenzmodulierten Übertragungswegen erforderlich, um das Entstehen diskreter stationÄrer Spektralfrequenzen zu verhindern. Besonders beim Fehlen des Modulationssignals würde die gesamte Energie des FM-TrÄgers auf einer einzigen Frequenz konzentriert sein und damit zu Übersteuerung und Beeinflussung (Intermodulation) in nachgeschalteten Gliedern führen.

Dieses ist z.B. bei der Satelliten-Übertragung von Fernsehsignalen der europÄischen Fernsehnorm 625 Zeilen/Bild mit PAL-Kodierung der Fall, wo im sogenannten Halbtransponder eines INTERSAT-Satelliten nur 17,5 MHz (3dB-Bandbreite) zur Verfügung stehen. Die gegenwÄrtig verwendeten Verwischungssignale für TV-Signale verwenden eine Dreiecksspannung mit 25 Hz Folgefrequenz (Periode = 2 V mit V = 20 ms = Dauer eines Halbbildes).

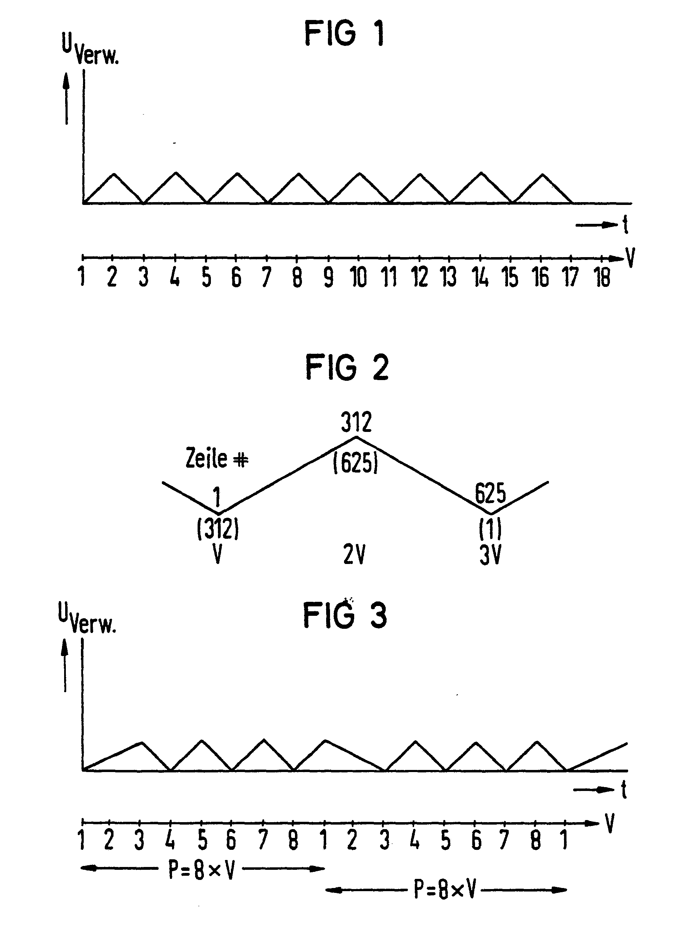

Die Umkehrpunkte der Dreiecksspannung liegen beim V-Synchronimpuls des Fernsehsignales (siehe Fig. 1). Die Spitzenhub der Spannung liegt bei 1 MHz, was einer Spitzenspannung von ca. 280 mV entspricht. Wie aus Fig. 2 zu ersehen, wird jeder Umkehrpunkt durch einen Vertikal-Synchronimpuls V synchronisiert, sodaß bei 25 Bildern/sec. (50 Halbbilder/sec.) alle 20 ms ein solcher Umkehrpunkt erreicht wird. Da eine feste Verkoppelung bezüglich der Halbbildsequenz nicht vorgesehen ist, kann entsprechend Fig. 2 z.B. die Zeile Nr. 1 des ersten Halbbildes oder die Zeile 312 des zweiten Halbbildes mit dem Fußpunkt der Dreiecksspannung und die Zeile 312 oder 625 mit ihrem Scheitelpunkt zusammenfallen. Die zweite Alternative ist in Fig. 2 in Klammern dargestellt. ÜbertrÄgt man mit dem Fernsehsignal die sogenannten prüfzeilen (CCIR-Empfehlung 569), so kÖnnte das für die differentielle VerstÄrkung und differentielle Phase empfindliche Signalelement D2 in Zeile Nr. 330, eine zeilenfrequente Treppenspannung mit Überlagerung einer HF-Schwingung von f = 4,433619 MHz, einmal auf dem Scheitelpunkt liegen und erheblich verzerrt werden, ein, andermal auf dem Fußpunkt liegen und kaum verzerrt werden. In letzterem Fall kann die Verzerrung sogar geringer sein als bei ausgeschalteter Verwischung. Aus den dargelegten Gründen erhÄlt man bei Prüfzeilenmessungen an verwischten Signalen keine reproduzierbaren und den realen Betriebszustand kennzeichnenden Meßwerte.

Die Erfindung hat die Aufgabe, diese Nachteile zu beheben. Diese Aufgabe wird bei einem Verwischungssignal nach dem Oberbegriff des Patentanspruchs 1 durch die im Kennzeichen angegebenen MaßnÄhmen gelÖst. ZweckmÄßige Weiterbildungen sind in den Unteransprüchen angegeben.

Im folgenden wird die Erfindung anhand von drei Figuren nÄher erlÄutert.

Es zeigen

Fig. 1 das dreieckfÖrmige Verwischungssignal nach dem Stand der Technik,

Fig. 2 die zufÄllige Zuordnung der Umkehrpunkte des Verwischungssignals zu den einzelnen Halbbildern nach dem Stand der Technik und

Fig. 3 die erfindungsgemÄße Zuordnung der Umkehrpunkte des Verwischungssignals zu den jeweiligen HalbbildanfÄngen und ihr periodischer Wechsel nach jeweils 8 Halbbildern.

Die Phasenumkehr des Dreiecksignals wird gemÄß Fig. 3 dadurch erreicht, daß entweder ein ansteigender oder ein abfallender Zeitabschnitt des Dreiecksignals von V = 20 ms auf 2 V = 40 ms (V = Halbbild) ausgedehnt wird. In diesem Zeitabschnitt (in Fig. 3 am Anfang und nach 8 Halbbildern nochmals dargestellt) hat das Dreieckssignal nur die halbe Steigung gegenüber den anderen Zeitabschnitten, damit die Amplitude unverÄndert bleibt.

Durch die lÄngere Verweildauer des verwischten Signales in einem festgelegten Frequenzbereich tritt keine Verringerung der Verwischungswirkung auf, da die Pausen vor-und nachher fast doppelt so lang sind als sonst und die StÖrenergie - effektiv gemessen - damit konstant bleibt. Je grÖßer die Periode P gewÄhlt wird, desto mehr ähnelt das Verwischungssignal in seinen Verwischungseigenschaften dem bisherigen Verwischungssignal. Durch eine zu große Periode P wird jedoch der Mittelungseffekt im Prüfzeilen-Analysator verringert und eine quasistationÄre Auswertung am Oszillografen beeintrÄchtigt. Als brauchbares Optimum bietet sich bei Prüfzeilenmessung im PAL-System eine Periode P = 8 an, die mit der sogenannten PAL-Achtersequenz übereinstimmt.

Der Generator, der in bekannter Weise das Verwischungssignal erzeugt, erhÄlt neben seinen bisherigen Bestandteilen zusÄtzliche eine Synchronisierstufe, die aus dem einlaufenden Videosignal ein Triggersignal erzeugt und je nach gewÄhlter Periodendauer den Umkehrpunkt von der Zeit V = 20 ms auf 2 x V = 40 ms verlagert. So entsteht eine Wellenform wie in Fig. 3.

## Patentansprüche

1. Verwischungssignal für bandbegrenzte, frequenzmodulierte Fernsehübertragungswege, bestehend aus einer dem Fernsehsignalu vor der Frequenzmodulation additiv überlagerten, mit der Vertikalfrequenz synchronisierten Dreiecksspannung, dadurch gekennzeichnet, daß eine definierte phasenmäßige Zuordnung der Umkehrpunkte der Dreiecksspannung zu einem der beiden HalbbildanfÄnge vorgesehen ist, die nach einer frei wÄhlbaren Periode P von dem einen Halbbildanfang auf den anderen Halbbildanfang wechselt.

2. Verwischungssignal nach Anspruch 1, dadurch gekennzeichnet, daß der Wechsel der Zuordnung der Phasenlage der Dreiecksspannung zu den Halbbildern am Beginn jeder Periode P durch Dehnung jeweils eines Zeitabschnittes der Dreiecksspannung von einem Halbbild auf zwei Halbbilder erzielt wird (Fig. 3).

3. Verwischungssignal nach Anspruch 1, dadurch gekennzeichnet, daß bei Farbfernsehsignalen nach der PAL-Norm die Periode P = 8 (entsprechend der PAL-Achtersequenz) gewÄhlt wird.


**Claims**

1. A smear signal for bandwidth-limited, frequencymodulated television channels, comprising a delta voltage which is additively superimposed upon the television signal prior to the frequency modulation and which is synchronised with the vertical frequency, characterised in that there is provided a defined phase-like allocation of the inversion points of the delta voltage to one of the two half-picture starts, which after a freely selectable period P changes from the one half-picture start to the other half-picture start.

2. A smear signal as claimed in claim 1, characterised in that the change of the allocation of the phase position of the delta voltage to the half-pictures at the beginning of each period P is obtained by extending a time interval of the delta voltage from one half-picture to two halfpictures (Fig. 3).

3. A smear signal as claimed in claim 1, characterised in that in colour television signals the period P = 8 (corresponding to the PAL sequence of eight) is selected in accordance with the PAL-norm.


**Revendications**

1. Signal d'effacement pour des voies de transmission de télévision modulées en fréquence et à bande limitée, formé par une tension en triangle superposée de façon additive au signal de télévision avant la modulation de fréquence et synchronisée sur la fréquence de balayage vertical, caractérisé par le fait qu'il est prévu une association définie, du point de vue de la phase, entre les points de rebroussement de la tension en triangle et l'un des deux-débuts de trame, cette association alternant d'un début de trame à l'autre début de trame au bout d'une période P pouvant étre sélectionnée librement.

2. Signal d'effacement suivant la revendication 1, caractérisé par le fait que l'alternance de l'association de la position de phase de la tension en triangle aux trames au début de chaque période P est obtenue grâce à une dilatation d'un intervalle de temps respectif de la tension en triangle d'une trame à deux trames (figure 3).

3. Signal d'effacement suivant la revendication 1, caractérisé par le fait que dans le cas de signaux de télévision conformément à la norme PAL, on choisit la période P = 8 (conformément à la séquence de huit PAL).

# FIG 1

$U_{Verw.}$

t

V

1  2  3  4  5  6  7  8  9  10  11  12  13  14  15  16  17  18

# FIG 2

312
(625)

Zeile #

1

625

(312)

(1)

V

2V

3V

# FIG 3

$U_{Verw.}$

t

V

1  2  3  4  5  6  7  8  1  2  3  4  5  6  7  8  1

P=8×V

P=8×V

1